# EUROPEAN PATENT APPLICATION

(11) **EP 1 039 277 A1**
(43) Date of publication of application: **27.09.2000**
(21) Application number: 00104580.6
(22) Date of filing: 14.03.2000
(51) Int. Cl.: G01H 1/10, G01H 1/00, G01H 11/00, G01H 11/02

(54) **Torsional vibration monitoring system**

(30) Priority: 22.03.1999 US 274269
(71) Applicant: Meritor Heavy Vehicle Systems, LLC, Troy, MI 48084 (US)
(72) Inventor: Brichta, James R., Highland, MI 48356 (US)
(74) Representative: Kitzhofer, Thomas, Dipl.-Ing.

(57) **Abstract**

A system for monitoring a torsional vibration of a rotating shaft in a vehicle drivetrain utilizes detected changes in a rotational speed of a shaft to determine when torsional vibrations occur. The system includes a sensor device for detecting the speed of rotation of a gear that is rotating with one of the drivetrain shafts. An electronic controller communicates with the sensor device to gather information on the speed of rotation of the gear rotating with the shaft. The electronic controller compares the information with a preselected threshold value. If the preselected threshold value has been exceeded, the electronic controller provides an output, which preferably notifies the driver of the excessive torsional vibration.

## Description

### BACKGROUND OF THE INVENTION

This invention generally relates to a system for detecting the torsional vibrations of rotating shafts in the drivetrain of a vehicle.

A variety of vehicle transmissions, drive axles, and drivelines, which make up the drivetrain of a vehicle, are available in the market. Heavy vehicles, such as commercial trucks, typically include relatively complex transmissions and drive axles used to transmit engine torque to the drive wheels. These complex transmissions and drive axles typically include many components that undergo a variety of stresses during normal operation of the vehicle. With the increasing availability of electronics for diagnosing the performance of vehicle components, it has become desirable to monitor a variety of variables within a vehicle drivetrain to optimize performance.

While systems have been proposed for monitoring certain variables, one that has been overlooked is the amount of torsional vibrations within a vehicle drivetrain while the vehicle is being driven. Currently available testing devices are limited in application to use for development and design testing procedures. Torsional vibrations typically occur when a rotating shaft is caused to accelerate or decelerate while the transmission is operating in a selected gear ratio. It is desirable to constantly monitor torsional vibrations so that action can be taken to minimize torsional vibration and, consequentially, to optimize performance of the vehicle drivetrain. The issue presented by undesirable high torsional vibrations in heavy vehicle drivetrains recently has become more important.

Over the last several years, heavy vehicle engine manufacturers have been producing high torque, low revolutions per minute (RPM) engine designs to help improve the overall efficiency and driveability of heavy vehicles. One drawback associated with these high torque, low RPM engines is that the incidence and magnitude of torsional vibrations within many drivetrains may increase, resulting in undesirable wear on the drivetrain components and unnecessary repair costs.

Prior to this invention, there was no integrated electronic system available to constantly monitor the torsional vibrations in the vehicle drivetrain. This invention addresses that need.

### SUMMARY OF THE INVENTION

In general terms, this invention is a system for monitoring torsional vibrations of rotating shafts in a vehicle drivetrain. The system includes a gear supported for rotating with the shaft, a sensor device that monitors rotation of the gear to detect a torsional vibration, and an electronic controller that communicates with the sensor device. The electronic controller also determines whether the detected torsional vibration exceeds a preselected threshold value and provides an output when the threshold value has been exceeded.

In a preferred embodiment the torsional vibration is detected by determining when the gear that rotates with the rotating shaft accelerates or decelerates. The system preferably determines when torsional vibrations occur that are outside of an acceptable acceleration or deceleration range, or when the shaft alternates between accelerating and decelerating. Once such a torsional vibration is detected the system preferably responds in one of three alternative manners. First, a signal preferably is provided to the driver of the vehicle indicating that an excessive torsional vibration has been detected. Second, information regarding the magnitude of the detected vibration is stored so that it can be later accessed by a service technician. Third, the electronic controller preferably communicates with the engine controller and transmission controller and provides an indication of vehicle performance variables that should be automatically adjusted to minimize torsional vibration.

### BRIEF DESCRIPTION OF THE DRAWINGS

Figure 1 is a schematic illustration of a system designed according to this invention.
Figure 2 is a schematic illustration of selected portions of the system of Figure 1.
Figure 3 is a timing diagram illustrating a feature of the system of Figure 1.
Figure 4 is a flowchart diagram illustrating the preferred method of this invention.
Figure 5 is another timing diagram illustrating a feature of the system of Figure 1.

### DETAILED DESCRIPTION OF THE PREFERRED EMBODIMENT

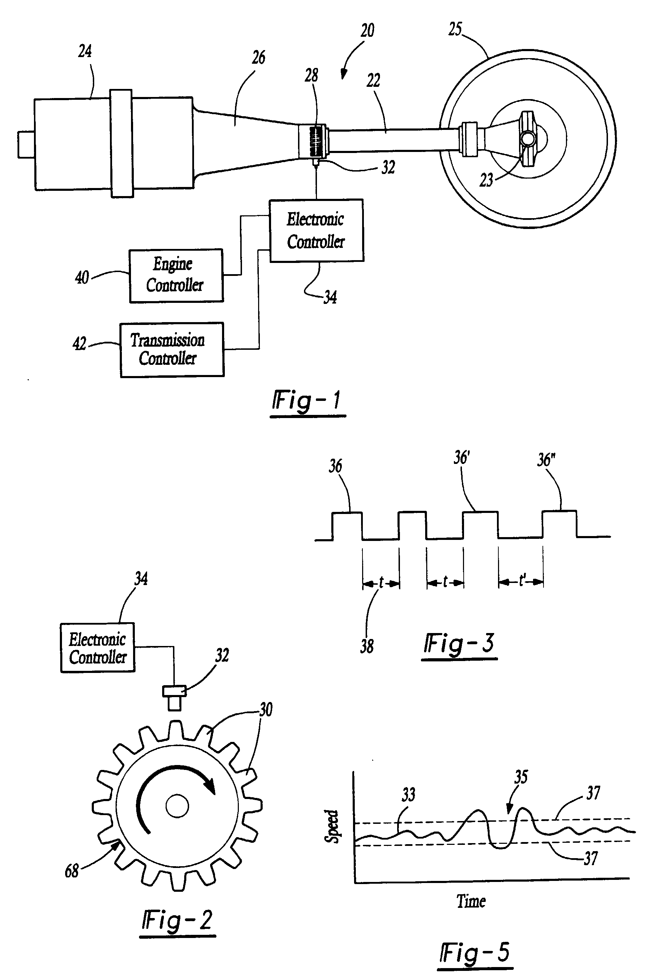

Figure 1 schematically illustrates a system 20 for monitoring a torsional vibration of a rotating shaft 22 in a vehicle drivetrain 24. The vehicle drivetrain is comprised of a transmission housing 26, a rotating driveshaft 22, the drive axle 23 and a wheel 25 attached to the drive axle 23. The transmission housing 26 houses components of the transmission portion of the drivetrain 24. A rotating shaft 22 and a gear 28 having a plurality of spaced teeth 30, which rotates with the shaft 22, are supported within the housing 26. In the illustrated example, the gear 28 is a speedo gear in the transmission 26.

A sensor device 32 is supported by the transmission housing 26 in a vicinity of the gear 28. The sensor device 32 preferably comprises either a magnetic pickup sensor or Hall effect sensor that detects a speed of rotation of the gear 28 as the teeth 30 pass by the sensor 32.

An electronic controller 34 most preferably is supported permanently on the vehicle in a conventional manner. The controller 34 communicates with the sensor device 32 and monitors the speed of rotation and determines whether the speed of rotation of the rotating shaft 22 has changed in a manner that indicates that a torsional vibration has occurred. The change in rotational speed preferably is determined in several steps. As shown in Figure 5, the rotational speed preferably is monitored and averaged over a period of time. This yields the mean speed 33 of the rotating shaft 22. Fluctuations in the mean speed 33 as shown at 35 indicate that a torsional vibration has occurred when the fluctuation amplitude is greater than a preselected threshold value 37. The electronic controller 34 preferably utilizes any detected changes or fluctuations in the mean speed 33 to determine a detected torsional vibration value. The electronic controller 34 then determines whether the detected torsional vibration value exceeds the preselected threshold value. The electronic controller 34 also preferably provides an output when the threshold value has been exceeded.

The preselected threshold value preferably includes an acceptable range of torsional vibration. Those skilled in the art will realize that the particular threshold values will be selected depending on the particular characteristics of a given drivetrain configuration. Additionally, the electronic controller 34 preferably dynamically adjusts the threshold value based upon current vehicle operating conditions such as utilizing different threshold values for different transmission gear ratios.

In the preferred embodiment, the electronic controller 34 utilizes pulse signals from the sensor device 32 to determine the torsional vibration values of the vehicle drivetrain 24. In one example, as each consecutive gear tooth 30 rotates past the sensor device 32, the sensor device 32 preferably generates a pulse 36. Figure 2 schematically illustrates the physical location of the sensor device 32 with respect to the gear 28 in an example where the sensor device is a magnetic pickup sensor or a Hall Effect sensor. The electronic controller 34 detects each pulse 36 and determines an amount of time 38 that elapses between each pulse 36, as shown in Figure 3. The frequency of the pulses 36 is indicative of the speed of rotation of the shaft 22.

The electronic controller 34 utilizes the pulses 36 and the time between each consecutive pulse to determine the mean speed 33 over a chosen time period and whether there is a change in the alternating component 35 of the mean speed 33 of the rotating shaft 22. The electronic controller 34 detects an acceleration when the time 38 between consecutive pulses 36 decreases. Similarly, the electronic controller 34 detects a deceleration when the time 38 between consecutive pulses 36 increases, as shown, for example, by time t' between pulse 36' and pulse 36''. The alternating acceleration and deceleration of the rotating shaft 22 above its mean speed 33 indicates a torsional vibration in the vehicle drivetrain 24 when the alternating component 35 exceeds the threshold 37. The magnitude of alternating acceleration and deceleration values on top of the mean speed 33 indicates the magnitude of the torsional vibration.

The electronic controller 34 compares the detected torsional vibration with the preselected threshold value, which preferably includes acceptable torsional vibration values, to determine if an excessive torsional vibration has occurred. The preselected threshold also may be defined in terms of a number of detected vibrations within a given time period. Given this description, those skilled in the art will be able to choose a threshold value or range to meet the needs of a particular situation. If the preselected threshold value has been exceeded, the electronic controller 34 preferably provides an output indicating an excessive torsional vibration in the vehicle drivetrain 24.

The preferred embodiment utilizes a mean speed 33 of rotation of the shaft 22 when detecting torsional vibrations. This invention is not limited, however, to using a mean speed as described.

The electronic controller 34 output preferably either immediately signals to the vehicle operator that there is excessive torsional vibration occurring and/or sends the information to a memory module (not illustrated) that stores the output and includes an indication that is later accessible by a service technician that there was an excessive torsional vibration situation. The indication to the driver preferably is provided through a visible indicator on the dash or instrument panel or by an audible signal. The notification to the driver preferably prompts the driver to make an adjustment, such as shifting gears or modifying pressure on the accelerator pedal, to minimize or eliminate the torsional vibrations.

In the example illustrated in Figure 1, the system 20 includes an engine controller 40 and a transmission controller 42 as known in the art. The electronic controller 34 preferably communicates with the engine controller 40 and the transmission controller 42 when the detected torsional vibration value exceeds the preselected threshold value. The output of the electronic controller 34 preferably provides information to the engine controller 40 and/or transmission controller 42 so that the performance of the drivetrain can be adjusted automatically by the engine and/or transmission controller to minimize or eliminate the torsional vibrations.

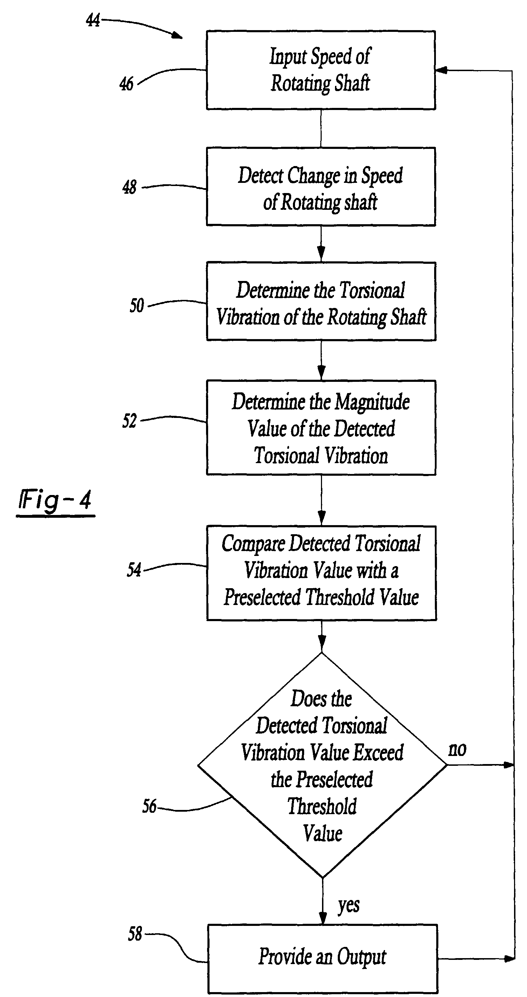

Figure 4 schematically illustrates the preferred method of operating the system 20. The flow chart 44 includes a first step at 46 where the sensor device 32 detects the speed of rotation of the rotating shaft 22 and sends the information to the electronic controller 34. The electronic controller 34 determines the mean speed 33 and detects any change in mean speed 33 of the rotating shaft 22 at 48. The change in mean speed is utilized to determine the magnitude of the torsional vibration of the rotating shaft 22 at 50. Next, a magnitude value of the torsional vibration is determined at 52. At step 54, the detected torsional vibration value is compared with the preselected threshold value. A decision is made at 56 to determine if the detected torsional vibration value exceeds the preselected threshold value. If the detected torsional vibration does exceed the preselected threshold value, then an output is provided at 58. As can be appreciated from the flow chart 44, the system 20 preferably continuously monitors torsional vibrations.

Given this description, those skilled in the art will be able to program a conventional microprocessor to perform the functions of the electronic controller 34.

The invention has been described in an illustrative manner, and it is to be understood that the terminology that has been used is intended to be in the nature of words of description rather than of limitation. Modifications and variations of the example described above are possible and it must be understood that such changes may be within the scope of the following claims. In other words, the invention may be practiced otherwise than as specifically described above.

## Claims

1. A system for monitoring a torsional vibration of a rotating shaft in a vehicle drivetrain comprising:
a gear that is supported for rotating with said shaft;
a sensor device that monitors rotation of said gear to detect a torsional vibration; and
an electronic controller that communicates with said sensor device, determines whether the detected torsional vibration exceeds a preselected threshold value, and provides an output when the threshold value has been exceeded.

2. The system of claim 1, wherein said gear includes a plurality of spaced teeth and said sensor device comprises a magnetic pickup sensor supported in a vicinity of said gear to detect movement of said teeth as said shaft rotates.

3. The system of claim 2, wherein the torsional vibration is detected as said gear teeth rotate past said sensor device and said sensor device generates a plurality of pulses indicative of a speed of rotation of said teeth and wherein said electronic controller utilizes the pulses to determine if the threshold is exceeded.

4. The system of claim 3, wherein said electronic controller determines whether consecutive time periods between consecutive ones of the pulses indicate a change in the speed of rotation of said shaft and utilizes the change to determine whether the threshold value has been exceeded.

5. The system of claim 4, wherein the change in speed includes a fluctuation in a mean speed of rotation.

6. The system of claim 1, wherein the preselected threshold value includes an acceptable range of torsional vibration and the electronic controller determines whether the detected torsional vibration is outside of the acceptable range.

7. The system of claim 1, wherein the electronic controller output includes an indication to the vehicle operator that the preselected threshold value has been exceeded.

8. The system of claim 1, wherein the electronic controller includes a memory module that stores the output and includes an indication that is selectively accessible by a service technician that the preselected threshold value has been exceeded.

9. The system of claim 1, wherein
said sensor device comprises a magnetic pickup sensor,
the rotating shaft includes a gear having teeth that rotates with said shaft, and
said sensor device generates a plurality of pulses indicative of movement of said teeth past said sensor as said shaft rotates and wherein said electronic controller determines whether time periods between consecutive pulses indicate a change in speed as the shaft rotates, and utilizes the change to determine when the threshold has been exceeded.

10. The system of claim 1, wherein said sensor device comprises a Hall Effect sensor.

11. A method of monitoring torsional vibrations of a rotating shaft in a vehicle drivetrain, comprising the steps of:
(A) detecting a torsional vibration of the rotating shaft;
(B) determining a magnitude value of the detected torsional vibration; and
(C) determining whether the value from step (B) exceeds a preselected threshold value.

12. The method of claim 11, further comprising providing an output indicating when the threshold value has been exceeded.

13. The method of claim 12, further comprising storing the output and later providing the output to a vehicle service technician that indicates that the preselected threshold value has been exceeded.

14. A vehicle drivetrain system comprising:
a transmission housing;
a rotating shaft supported within said housing such that said shaft can rotate relative to said housing;
a gear having a plurality of spaced teeth and supported on said shaft for rotating with said shaft:
a sensor device that is supported by said housing and detects movement of said teeth caused by rotation of said shaft; and
an electronic controller that communicates with said sensor device and determines a speed of rotation of said shaft and determines when there is a change in the speed of rotation and utilizes the change to determine a torsional vibration value.

15. The system of claim 14, wherein said electronic controller determines when the detected torsional vibration value exceeds a preselected threshold value and said electronic controller provides an output when the threshold value has been exceeded.

16. The system of claim 15, further comprising:
an engine controller; and
a transmission controller,
wherein said electronic controller communicates the output to said engine controller and said transmission controller when the preselected threshold value is exceeded.

17. The system of claim 16, wherein the sensor device comprises a magnetic pickup sensor that generates an electrical pulse responsive to each said gear tooth passing said sensor device and,
said electronic controller detects each pulse and detects an amount of time that elapses between each pulse.

18. The system of claim 17, wherein
an acceleration is detected by said electronic controller when the time between consecutive pulses decreases, and
a deceleration is detected by said electronic controller when the time between consecutive pulses increases,
said electronic controller utilizes at least one of the detected acceleration or deceleration to determine the torsional vibration value.

19. The system of claim 18, wherein the preselected threshold value includes acceptable acceleration and deceleration values.

20. The system of claim 19, wherein said electronic controller compares the detected torsional vibration value to the preselected threshold value.
